# EUROPÄISCHE PATENTANMELDUNG

(11) **EP 2 584 316 A2**
(43) Veröffentlichungstag der Anmeldung: **24.04.2013**
(21) Anmeldenummer: 12007000.8
(22) Anmeldetag: 09.10.2012
(51) Int. Cl.: G01C 21/36

(54) **Verfahren und Vorrichtungen zur Fahrzeugnavigation**

(30) Priorität: 22.10.2011 DE 102011116718; 24.02.2012 DE 102012003764
(71) Anmelder: Volkswagen Aktiengesellschaft, 38440 Wolfsburg (DE)
(72) Erfinder: Petersen, Sönke, 10999 Berlin (DE); Eichhorn, Elisabeth, 10115 Berlin (DE); Lou, Jian, 10707 Berlin (DE); Schönig, Jürgen, 13187 Berlin (DE); Benscheid, Thomas, 14089 Berlin (DE)

(57) **Zusammenfassung**

Es werden Verfahren und Vorrichtungen zu Navigationssystemen bereitgestellt, bei welchen Zusatzinformationen und Maßstäbe zur Darstellung einer Fahrzeugumgebung einander wechselseitig zugeordnet sind, beispielsweise in Form mehrerer Ebenen (20-23), Zwischen den Schichten kann beispielsweise durch Zoomen gewechselt werden.

## Beschreibung

Die vorliegende Erfindung betrifft Verfahren und Vorrichtungen zur Fahrzeugnavigation. Insbesondere betrifft die vorliegende Erfindung derartige Verfahren und Vorrichtungen, bei welchen neben Informationen zur Navigation selbst auch Zusatzinformationen angezeigt werden.

In Fahrzeugen, beispielsweise in Kraftfahrzeugen, werden zunehmend Navigationssysteme verwendet, um einen Fahrer des Fahrzeugs zu einem gewünschten Ziel zu lenken. Derartige Systeme können sowohl fest in dem Fahrzeug verbaute Systeme als auch mobile Systeme, welche beispielsweise mittels einer Halterung im Cockpit des Fahrzeugs befestigt werden können, sein. Navigationssysteme verwenden typischerweise einen GPS-Empfänger (Global Positioning System) zum Bestimmen einer Position des Fahrzeugs und geben abhängig von dieser Position Navigationsanweisungen. Moderne Navigationssysteme verfügen dabei zudem über eine Anzeigeeinrichtung, auf welcher eine Karte einer Umgebung des Fahrzeugs, beispielsweise in Draufsicht oder in perspektivischer Ansicht, dargestellt wird.

Derartige Anzeigeeinrichtungen, beispielsweise LCD-Dispiays oder OLED-Displays, können auch verwendet werden, um zusätzliche Informationen darzustellen. Beispielsweise ist es aus der DE 10 2008 026 186 A1 bekannt, zwischen verschiedenen Anzeigen, beispielsweise einer Anzeige einer gesamten Fahrtroute, einer Anzeige eines Ausschnittes der Fahrtroute und Anzeige von Zusatzinformationen wie Routenwetter, Routenverkehr oder interessierende Punkte (POI, Points of Interest) zu wechseln. Ein derartiges Wechseln der Anzeige kann dazu führen, dass sich ein Fahrer ständig neu orientieren muss und somit von dem Wechsel der Anzeige stark abgelenkt wird, was unter Umständen zu gefährlichen Verkehrssituationen führen könnte.

Es ist daher eine Aufgabe der vorliegenden Erfindung, Verfahren und Vorrichtungen bereitzustellen, womit verschiedene Zusatzinformationen in einem Navigationssystem darstellbar sind und eine Ablenkung des Fahrers durch Neuorientierungen verringert wird.

Diese Aufgabe wird gelöst durch ein Verfahren nach Anspruch 1 sowie eine Vorrichtung nach Anspruch 9. Die Unteransprüche definieren weitere Ausführungsbeispiele.

Bei einem erfindungsgemäßen Verfahren wird ein Maßstab für eine Darstellung einer Umgebung eines Fahrzeugs ausgewählt, beispielsweise durch einen Benutzer. Es wird dann automatisch eine dem Maßstab zugeordnete Zusatzinformation bestimmt und auf einer Anzeige eine Umgebung eines Fahrzeugs in dem gewählten Maßstab mit der entsprechenden Zusatzinformation angezeigt.

Alternativ kann auch die Zusatzinformation durch einen Benutzer ausgewählt werden und dann automatisch ein entsprechender zugeordneter Maßstab bestimmt werden. Dann wird wiederum die Fahrzeugumgebung in dem Maßstab mit der Zusatzinformation angezeigt. In anderen Worten besteht erfindungsgemäß eine Zuordnung zwischen Maßstab der Darstellung und Zusatzinformation. Indem zusammen mit den Zusatzinformationen jeweils eine Umgebung des Fahrzeugs in einem zugeordneten Maßstab angezeigt wird, ist eine leichte Orientierung des Fahrers möglich, und eine Ablenkung des Fahrers des Fahrzeugs kann reduziert werden.

Das Verfahren kann wiederholt durchgeführt werden, wobei auf diese Weise von einem Maßstab zu einem anderen Maßstab und von einer Zusatzinformation zu einer anderen Zusatzinformation gewechselt werden kann. Das Wechseln der Anzeige kann dann durch Zoomen erfolgen, d.h. zwischen einem zunächst angezeigten Maßstab und einem anzuzeigenden Maßstab wird über mehrere Zwischenbilder mit dazwischen liegenden Maßstäben gewechselt, bevorzugt derart, dass das Zoomen stufenlos erfolgt.

Die Zusatzinformationen mit zugeordneten Maßstäben können dabei in mehreren Ebenen organisiert sein, wobei beim Wählen eines neuen Maßstabs oder einer neuen Zusatzinformation zwischen den Ebenen gewechselt wird.

Verschiedenen Maßstäben können auch verschiedene Perspektiven der Darstellung zugeordnet sein, oder die Perspektive kann unabhängig vom Maßstab gewählt werden.

Zusatzinformationen können beispielsweise Wetterinformationen, Umgebungsinformationen, Informationen bezüglich des Fahrzeugs selber oder bezüglich Assistenzsystemen des Fahrzeugs oder Informationen bezüglich eines Entertainmentsystems des Fahrzeugs umfassen.

Die Darstellung der Umgebung des Fahrzeugs kann insbesondere als Kartendarstellung erfolgen.

Eine entsprechende erfindungsgemäße Vorrichtung umfasst eine Eingabeeinrichtung, eine Steuereinrichtung, beispielsweise ein Navigationsgerät, und eine Anzeige. Über die Eingabeeinrichtung ist ein Maßstab oder eine Zusatzinformation wählbar, und die Steuereinrichtung bestimmt dann die dem Maßstab zugeordnete Zusatzinformation bzw. den der Zusatzinformation zugeordneten Maßstab und bewirkt, dass eine Fahrzeugumgebung in dem Maßstab mit der Zusatzinformation auf der Anzeigeeinrichtung angezeigt wird.

Eine derartige Vorrichtung kann insbesondere die oben beschriebenen Verfahren durchführen.

Die Erfindung wird nachfolgend unter Bezugnahme auf die beigefügte Zeichnung anhand von Ausführungsbeispielen näher erläutert. Es zeigen:
- Figur 1: einen Teil eines mit einer erfindungsgemäßen Vorrichtung gemäß einem Ausführungsbeispiel ausgerüsteten Fahrzeugs,
- Figur 2: ein Blockdiagramm eines Ausführungsbeispiels einer erfindungsgemäßen Vorrichtung,
- Figur 3: ein Flussdiagramm eines Ausführungsbeispiels eines erfindungsgemäßen Verfahrens,
- Figur 4: ein Diagramm zur Veranschaulichung der Verwendung von verschiedenen Ebenen in manchen Ausführungsbeispielen, und
- Figuren 5A bis 5C: Beispiele für Anzeigen mit verschiedenen Maßstäben und mit verschiedenen Zusatzinformationen.

Im Folgenden werden Ausführungsbeispiele der Erfindung näher erläutert. Zu bemerken ist, dass Merkmale verschiedener Ausführungsbeispiele miteinander kombiniert werden können, sofern nichts anderes angegeben ist. Zudem ist eine Beschreibung eines Ausführungsbeispiels mit einer Vielzahl von Merkmalen nicht dahingehend auszulegen, dass alle diese Merkmale zur Ausführung der Erfindung notwendig sind, da andere Ausführungsbeispiele weniger Merkmale und/oder alternative Merkmale aufweisen können.

Ausführungsbeispiele der vorliegenden Erfindung beziehen sich auf Navigationssysteme und entsprechende Verfahren in einem Fahrzeug. Es ist zu bemerken, dass unter Navigationssystemen nicht nur Systeme zu verstehen sind, welche nach Eingabe eines Ziels einen Benutzer zu diesem Ziel hinführen, sondern auch Systeme, welche lediglich eine Kartendarstellung oder eine andere Darstellung einer Umgebung des Fahrzeugs bieten, um so die Navigation zu erleichtern.

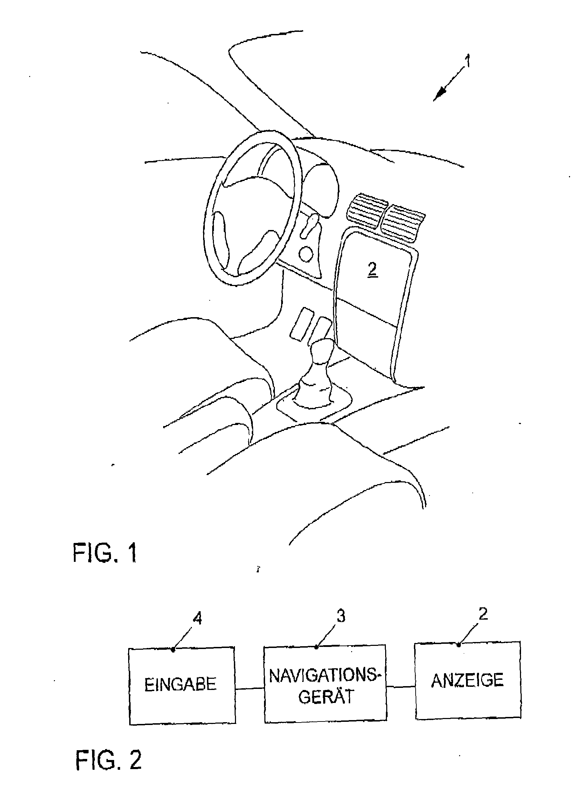

In Fig. 1 ist ein Cockpit eines mit einer erfindungsgemäßen Vorrichtung gemäß einem Ausführungsbeispiel ausgerüsteten Fahrzeugs 1 dargestellt. In dem Cockpit des Fahrzeugs 1 ist bei dem Beispiel der Fig. 1 eine Anzeigeeinrichtung 2 angeordnet, auf welcher wie später näher erläutert werden wird mit einer erfindungsgemäßen Vorrichtung und/oder einem erfindungsgemäßen Verfahren gemäß Ausführungsbeispielen Umgebungen des Fahrzeugs in verschiedenen Maßstäben zusammen mit Zusatzinformationen anzeigbar sind. Bei dem dargestellten Beispiel ist die Anzeigeeinrichtung 2, beispielsweise ein LCD-Display oder ein OLED-Display, fest in dem Fahrzeug 1 verbaut. Die Erfindung ist jedoch ebenso auf Anzeigen auf mobilen Navigationssystemen oder auch Anzeigen von anderen elektronischen Geräten, welche als Navigationssystem dienen können, beispielsweise Smartphones, anwendbar. Die Anzeigeeinrichtung 2 kann eine nur für das Navigationssystem genutzte Anzeigeeinrichtung sein, sie kann jedoch auch ebenso anderen Zwecken dienen, beispielsweise eine Anzeigeeinrichtung einer Multifunktionsbedieneinrichtung des Fahrzeugs sein, über welche neben dem Navigationssystem auch andere Fahrzeugfunktionen, beispielsweise eine Klimaanlage des Fahrzeugs oder eine Musikanlage des Fahrzeugs, steuerbar sind.

In Fig. 2 ist ein Blockdiagramm eines Ausführungsbeispiels einer erfindungsgemäßen Vorrichtung dargestellt, welche beispielsweise in dem Fahrzeug 1 der Fig. 1 bereitgestellt sein kann. Die Vorrichtung der Fig. 2 umfasst eine Anzeigeeinrichtung 2, beispielsweise die Anzeigeeinrichtung 2 der Fig. 1, eine Eingabeeinrichtung 4, mit welcher ein Benutzer Eingaben vornehmen kann, und ein Navigationsgerät 3, welches als Steuereinrichtung der Vorrichtung der Fig. 2 dient. Die Eingabeeinrichtung 4 kann beispielsweise Drehregler und/oder Knöpfe umfassen. Bei manchen Ausführungsbeispielen kann die Anzeigeeinrichtung 2 auch als so genannter Touchscreen ausgebildet sein, d.h. als berührungsempfindlicher Bildschirm, und kann somit gleichzeitig als Eingabeeinrichtung 4 oder Teil hiervon dienen. Bei anderen Ausführungsbeispielen kann die Eingabeeinrichtung 4 auch eine Spracheingabemöglichkeit umfassen.

Über die Eingabeeinrichtung 4 kann ein Benutzer einen Maßstab für eine Darstellung einer Umgebung des Fahrzeugs auswählen bzw. zwischen verschiedenen Maßstäben auswählen. Über das Navigationsgerät 3 wird dann auf der Anzeigeeinrichtung 2 die Umgebung des Fahrzeugs in einem entsprechenden Maßstab zusammen mit einer dem jeweiligen Maßstab zugeordneten Zusatzinformation angezeigt. Alternativ kann auch eine Zusatzinformation ausgewählt werden, wobei dann die Zusatzinformation in einer Darstellung der Umgebung des Fahrzeugs mit einem der Zusatzinformation zugeordneten Maßstab dargestellt wird. In anderen Worten besteht bei dem Ausführungsbeispiel der Fig. 2 eine wechselseitige Zuordnung zwischen Maßstab und darzustellenden Zusatzinformationen.

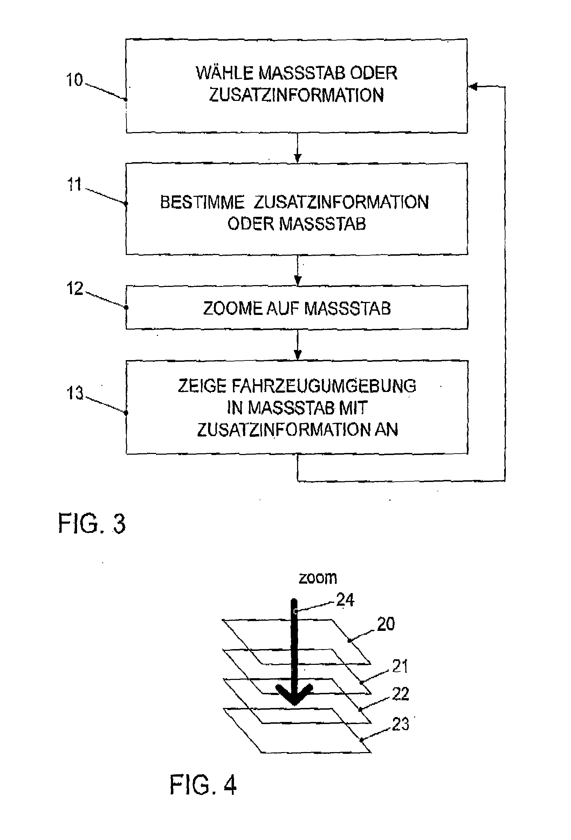

Ein Ausführungsbeispiel eines entsprechenden Verfahrens, welches beispielsweise in der Vorrichtung der Fig. 2 implementiert sein kann, aber auch unabhängig hiervon verwendbar ist, ist in Fig. 3 dargestellt.

In Schritt 10 wird durch einen Benutzer ein Maßstab für eine Darstellung einer Umgebung des Fahrzeugs oder eine darzustellende Zusatzinformation gewählt. Zu bemerken ist, dass das Auswählen des Maßstabs nicht auf eine explizite Eingabe eines Maßstabs beschränkt ist, sondern beispielsweise auch einfach durch ein Auswählen einer Vergrößerungsfunktion oder einer Verkleinerungsfunktion ausgehend von einem derzeitigen Maßstab erfolgen kann.

Wurde in Schritt 10 ein Maßstab ausgewählt, wird in Schritt 11 eine dem Maßstab zugeordnete Zusatzinformation bestimmt. Wurde in Schritt 10 eine Zusatzinformation ausgewählt, wird in Schritt 11 ein der Zusatzinformation zugeordneter Maßstab bestimmt.

Wird bereits eine Umgebung des Fahrzeugs in einem Maßstab, weicher sich von dem in Schritt 10 ausgewählten Maßstab oder dem in Schritt 11 bestimmten Maßstab unterscheidet, angezeigt, kann in Schritt 12 ein Zoomen auf den neuen Maßstab erfolgen. Unter Zoomen ist dabei ein schrittweiser Übergang von einem momentan dargestellten Maßstab auf einen neu darzustellenden Maßstab, d.h. den in Schritt 10 gewählten oder in Schritt 11 bestimmten Maßstab, zu verstehen, wobei dieser Übergang über ein oder mehrere dazwischen liegende Maßstäbe erfolgt. Bevorzugt erscheint dieser Übergang einem Betrachter als stufenloses Zoomen.

In Schritt 13 wird dann die Fahrzeugumgebung in dem Maßstab, d.h. in dem in Schritt 10 ausgewählten oder in Schritt 11 bestimmten Maßstab, mit der in Schritt 10 ausgewählten oder Schritt 11 bestimmten Zusatzinformation angezeigt.

Zu bemerken ist, dass zusätzlich zu dem Maßstab auch eine Perspektive gewählt werden kann, beispielsweise eine Draufsicht (2D-Perspektive) oder eine Schrägansicht (3D-Perspektive), oder jedem Maßstab eine Perspektive zugeordnet sein kann.

Die Darstellungen in verschiedenen Maßstäben mit den zugeordneten Zusatzinformationen können in Schichten oder Ebenen organisiert sein. Dies ist in Fig. 4 schematisch dargestellt.

In Fig. 4 sind vier Ebenen 20-23 dargestellt, weiche in Fig. 4 von oben nach unten, d.h. von Ebene 20 zu Ebene 23, zunehmend einen größeren Maßstab aufweisen, d.h. eine zunehmend kleinere Umgebung des Fahrzeugs darstellen. Jeder Schicht sind zudem Zusatzinformationen zugeordnet. Die Ebene 20 ist beispielsweise eine "Wetterschicht", bei welcher Wetterinformationen zusammen mit einer Übersichtskarte, welche eine große Umgebung des Fahrzeugs zeigt, dargestellt sind. In einer Ebene 21 ist ebenso eine Karte dargestellt, jedoch in einem größeren Maßstab, sodass das Fahrzeug bereits auf der Karte erkennbar ist. In einer Ebene 22 ist das Fahrzeug bereits im Detail zu erkennen, und als Zusatzinformationen sind beispielsweise Informationen über Assistenzsysteme des Fahrzeugs, beispielsweise eine Einparkhilfe, dargestellt.

In einer Ebene 23, welche den größten Maßstab, d.h. die kleinste Umgebung des Fahrzeugs, aufweist, sind Fahrzeugdetails, beispielsweise Blinker oder eine Reifenstellung für eine Einparksituation, als Zusatzinformationen erkennbar. Die in Fig. 4 dargestellten Ebenen 20-23 reichen also gleichsam von einer Flugzeugperspektive in der Ebene 20 bis zu Fahrzeugdetails in der Ebene 23. Wie durch einen Pfeil 24 angedeutet kann durch Zoomen, was ein Beispiel für eine Wahl eines Maßstabs darstellt, zwischen den Ebenen gewechselt werden, wobei der Übergang insbesondere durch stufenloses Zoomen erfolgen kann, wozu gleichsam "Zwischenebenen" eingefügt werden können, bei weichen der Maßstab zwischen den dargestellten Ebenen liegt.

Zu bemerken ist, dass zwischen verschiedenen Ebenen auch die Perspektive gewechselt werden kann. Zudem ist die Anzahl von vier Ebenen lediglich als Beispiel zu verstehen, und jede beliebige gewünschte Anzahl von Ebenen kann bei Ausführungsbeispielen der Erfindung verwendet werden.

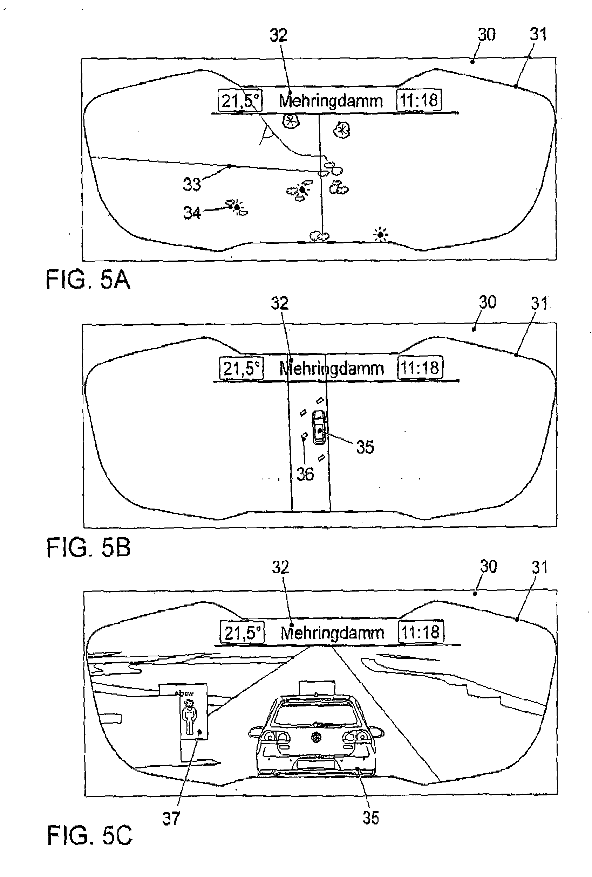

Beispiele für die Darstellung verschiedener Ebenen auf einer Anzeigeeinrichtung, beispielsweise einem Bildschirm, sind in den Figuren 5A bis 5C dargestellt. In den Figuren 5A bis 5C ist jeweils eine Anzeigefläche 30 einer Anzeigeeinrichtung dargestellt, wobei eine Umrandung 31 eine dargestellte Umgebung eines Fahrzeugs 35 begrenzt. Mit 32 werden Zusatzinformationen umfassend eine Außentemperatur, ein Straßenname einer momentan befahrenen Straße und eine Uhrzeit dargestellt. Diese Zusatzinformationen werden bei dem dargestellten Ausführungsbeispiel unabhängig von der dargestellten Ebene, d.h. dem dargestellten Maßstab, angezeigt.

Fig. 5A zeigt ein Beispiel für eine Darstellung der Ebene 20 aus Fig. 4, d.h. der "Wetterebene". Eine Karte, umfassend beispielsweise Straßen 33, ist in einem großen Maßstab dargestellt, sodass hier eine weite Umgebung des Fahrzeugs dargestellt ist. Piktogramme 34 zeigen Wetterinformationen, beispielsweise Sonne, Wolken und dgl., an.

In Fig. 5B ist ein Beispiel für die Ebene 21 der Fig. 4 dargestellt. Zwischen der Darstellung der Fig. 5A und der Darstellung der Fig. 5B kann beispielsweise durch Heranzoomen bzw. Herauszoomen umgeschaltet werden. In der Darstellung der Fig. 5B ist das Fahrzeug 35 bereits deutlich auf einer entsprechenden Straße erkennbar. Elemente 36 können zusätzliche Informationen über das Fahrzeug angeben.

In Fig. 5C ist ein Beispiel für die Ebene 22 der Fig. 4 dargestellt. Hier ist das Fahrzeug 35 größer als im Falle der Fig. 5B. Zudem findet bei diesem Beispiel zwischen der Darstellung der Fig. 5B und der Darstellung der Fig. 5C ein Perspektivenwechsel in eine Schrägansicht statt. In der Darstellung der Fig. 5C ist als Zusatzinformation 37 beispielsweise ein Album einer Musikabspielvorrichtung des Fahrzeugs dargestellt. Weiterhin können beispielsweise bei der Fig. 5C Informationen zu Assistenzsystemen des Fahrzeugs zusätzlich angezeigt werden.

Wie aus dem obigen Beispiel erkennbar ist, ist es durchaus möglich, dass manche Zusatzinformationen, beispielsweise die Zusatzinformationen 32 der Fig. 5A-5C, mehreren Maßstäben zugeordnet sind. Zudem ist es grundsätzlich auch möglich, dass manchen Maßstäben keine Zusatzinformation zugeordnet ist, oder ein Benutzer aus mehreren einem jeweiligen Maßstab zugeordneten Zusatzinformationen wählen kann.

## Patentansprüche

1. Verfahren für ein Navigationssystem (2, 3, 4) eines Fahrzeugs (1), umfassend:
Auswählen eines Maßstabs für eine Darstellung oder einer darzustellenden Zusatzinformation,
automatisches Bestimmen einer dem ausgewählten Maßstab zugeordneten Zusatzinformation oder eines der ausgewählten Zusatzinformation zugeordneten Maßstabs, und
Anzeigen einer Fahrzeugumgebung in dem Maßstab zusammen mit der Zusatzinformation.

2. Verfahren nach Anspruch 1, **dadurch gekennzeichnet, dass** das Auswählen und das Bestimmen ein Auswählen einer Ebene einer Mehrzahl von Ebenen (20-23) umfasst, wobei jeder Ebene der Mehrzahl von Ebenen (20-23) ein Maßstab zugeordnet ist, und wobei mindestens einer Ebene der Mehrzahl von Ebenen (20-23) eine Zusatzinformation zugeordnet ist.

3. Verfahren nach Anspruch 2, **dadurch gekennzeichnet, dass** die Mehrzahl von Ebenen eine Ebene (20) mit Wetterinformationen als Zusatzinformation umfasst.

4. Verfahren nach Anspruch 2 oder 3, **dadurch gekennzeichnet, dass** die Mehrzahl von Ebenen (20-23) eine Ebene (22) mit Informationen bezüglich Assistenzsystemen des Fahrzeugs als Zusatzinformation umfasst.

5. Verfahren nach einem der Ansprüche 2-4, **dadurch gekennzeichnet, dass** das Auswählen des Maßstabs ein Wechsel zwischen zwei Ebenen der Mehrzahl von Ebenen umfasst, und
wobei das Anzeigen ein Wechsel der Anzeige einer ersten Ebene zu einer Anzeige einer zweiten Ebene umfasst, wobei das Wechseln der Anzeige ein Zoomen zwischen der ersten Ebene und der zweiten Ebene umfasst.

6. Verfahren nach einem der Ansprüche 1-5, **dadurch gekennzeichnet, dass** das Auswählen eines Maßstabs ein Heranzoomen oder ein Herauszoomen umfasst.

7. Verfahren nach einem der Ansprüche 1-6, weiter umfassend Auswählen einer Perspektive, wobei das Anzeigen in der ausgewählten Perspektive erfolgt.

8. Verfahren nach einem der Ansprüche 1-7, wobei jedem Maßstab eine Perspektive zugeordnet ist, wobei das Anzeigen mit der dem jeweiligen Maßstab zugeordneten Perspektive erfolgt.

9. Vorrichtung für ein Navigationssystem, umfassend:
eine Eingabeeinrichtung (4) zum Auswählen eines Maßstabs für eine Darstellung oder einer darzustellenden Zusatzinformation,
eine Steuereinrichtung (3) zum automatischen Bestimmen einer dem ausgewählten Maßstab zugeordneten Zusatzinformation oder eines der ausgewählten Zusatzinformation zugeordneten Maßstabs, und
eine Anzeigeeinrichtung (2) zum Anzeigen einer Umgebung eines Fahrzeugs (1) in dem Maßstab zusammen mit der Zusatzinformation.

10. Vorrichtung nach Anspruch 9, wobei die Vorrichtung zur Durchführung des Verfahrens nach einem der Ansprüche 1-8 ausgestaltet ist.

11. Fahrzeug (1) mit einer Vorrichtung nach Anspruch 9 oder 10.
